# EUROPEAN PATENT SPECIFICATION

(11) **EP 1 314 809 B1**
(45) Date of publication and mention of the grant of the patent: **10.05.2006**
(21) Application number: 02024845.6
(22) Date of filing: 08.11.2002
(51) Int. Cl.: D06F 25/00, D06F 58/02, D06F 58/24

(54) **Drum type washing and drying machine**
Trommelwaschmaschine mit Trocknungsfunktion
Machine à laver et à sécher à tambour

(30) Priority: 14.11.2001 JP 2001349197
(43) Date of publication of application: 28.05.2003
(73) Proprietor: SANYO ELECTRIC CO., LTD., Moriguchi-shi, Osaka 570-8677 (JP)
(72) Inventor: Kawamura, Tamotsu, Yokaichi-shi, Shiga-ken 527-0015 (JP); Funada, Yorihisa, Yasu-gun, Shiga-ken 520-2324 (JP); Takeuchi, Harumi, Otsu-shi, Shiga-ken 520-2276 (JP); Nakagawa, Kenji, Kusatsu-shi, Shiga-ken 525-0036 (JP); Nakamura, Satoshi, Otsu-shi, Shiga-ken 520-0851 (JP); Fukui, Takashi, Otsu-shi, Shiga-ken 520-2133 (JP)
(74) Representative: Hoeger, Stellrecht & Partner Patentanwälte

(56) References cited:
- EP-A- 0 421 442
- EP-A- 0 481 442
- EP-A- 1 055 765
- DE-A- 3 403 622
- FR-A- 2 701 042
- US-A- 4 112 590

## Description

The present invention relates to a drum type washing and drying machine having a drum rotated about a horizontal or inclined axis.

### BACKGROUND OF THE INVENTION

A drum type washing/drying machine has an outer tub and a cylindrical basket type drum which is disposed in the outer tub and rotates about a horizontal or inclined axis. The drum is rotated in the outer tub containing water with laundry loaded therein to wash the laundry by tumbling them. After the washing, the wet laundry is dried by heated air blown into the outer tub.

One of the major dissatisfactions among consumers of the above drum type washing/drying machine is the difficulty in loading or unloading clothes. More specifically, a conventional and widespread drum type washing machine has a substantially rectangular parallelpiped housing provided with a front door which opens laterally for a user to load clothes in. When the door is opened, a throw-in opening provided on the front end of the drum can be seen through an opening provided in the outer tub. Accordingly, the throw-in opening is typically located at a lower part of the washing/drying machine and, therefore, the difficulty in loading or unloading clothes cannot be completely eliminated even by placing the washing/drying machine on a dedicated platform. In order to resolve the dissatisfaction, in some of the currently available drum type washing/drying machines, a throw-in opening of a drum is directed slightly upward by the use of an inclined axis. Also, in some washing/drying machines, a throw-in opening is designed to be as large as possible. These structures, however, cannot yield a satisfactory result for those who are accustomed to user-friendly whirl type washing machines.

Further, in one of washing methods often carried out by the consumers, laundry is firstly soaked in a solution of bleach or the like stored in a bucket or the like, and then the laundry with the solution or only the laundry is transferred to the washing tub of the washing/drying machine. With the above-mentioned conventional drum type washing/drying machines, the laundry often drips the solution onto floor when only the laundry is transferred from the bucket to the washing tub (drum) and, also, it is very difficult to transfer the solution itself from the bucket to the washing tub. Such difficulties are also considered as shortcomings of the drum type washing/drying machine.

Owing to the above arrangements of the drum type washing/drying machine, the height of the housing could be decreased, but the width and the length tend to increase. Particularly, since it is necessary to place the washing/drying machine on a waterproofing pan in collective housings such as an apartment, the housing is under a rigid size limitation. In turn, there has been a demand for a larger washing capacity in recent years, and it is necessary to design such a washing/drying machine which has a housing reduced in size and an outer tub increased in capacity. Therefore, the space between the housing and the outer tub is inevitably narrowed, and it is necessary to arrange components in the space more effectively. In the drum type washing/drying machine, particularly, it is necessary to dispose not only components required for rotating the drum (e.g., the driving unit for the drum), but also components required for drying (e.g., an air channel for drying), which is considerably difficult.

In the drum type washing/drying machine, a circulating air channel is formed to be used in a drying operation: for blowing heated air into the outer tub; for discharging humid air containing water evaporated from the wet laundry out of the outer tub; for drying the humid air by passing it through a water-cooling (or air-cooling) heat exchanger which condenses water vapor into water; and for heating the dry air again to supply the heated air into the outer tub. In the drying operation, the outer tub itself acts like a heat exchanger because the temperature inside the outer tub is raised due to the heated air while the temperature of the air outside the outer tub is relatively low, and the water vapor is sometimes condensed to form water droplets inside the outer tub. The water droplets remaining inside the outer tub after a completion of the drying operation drip on the laundry due to vibration of the outer tub which occurs when a user takes out the laundry, thereby moistening the dried laundry in some cases.

FR 2 701 042 A1 discloses an air and/or water circulation device for a drum-type washing machine.

The document DE 34 03 622 A1 discloses an automatically controlled washing machine with a detergent container which is arranged behind containers for a detergent flushing device.

EP 0 421 442 A2 discloses a drum-type washing machine with a frame, an outer tub supported in the frame and a horizontal shaft-type drum rotatably supported in the outer tub, wherein the drum has a diameter which is increased from a side of one end to a side of the other end. A balancer is fitted to the side of the other end of the drum.

EP 1 055 765 A1 discloses a drum type washing machine which comprises an outer cabinet, a water tub mounted in the outer cabinet and having a rear end plate. A drum-shaped rotating tub is rotatably mounted in the water tub and has a rear wall. An electric motor is provided for rotating the rotating tub via the rotating tub shaft. The motor includes a stator provided on the rear end plate of the water tub and the rotor is connected to the rear end of the rotating tub shaft. An aligning structure for aligning a centre of rotation of the rotor and a centre of the stator is provided.

EP 0 481 442 A2 discloses a tumbler type washing/drying machine.

### SUMMARY OF THE INVENTION

The present invention is accomplished in view of the above-mentioned problems, and an object thereof is to provide a drum type washing/drying machine which is user-friendly and has a washing capacity as large as possible by effectively using the space between the housing and the outer tub without increasing the size of the housing.

Another object of the present invention is to provide a drum type washing/drying machine capable of preventing dried laundry from being moistened by water condensed on an inner wall of the outer tub during a drying operation.

In accordance with the present invention, a drum type washing/drying machine includes:
a housing;
an outer tub having a body with a substantially cylindrical peripheral wall enclosed in the housing;
a drum with a substantially cylindrical peripheral wall mounted rotatably about a horizontal or inclined axis in the outer tub;
a throw-in opening formed on the peripheral wall of the drum;
an opening formed on the top of the housing, the opening of the housing leading to the throw-in opening;
a lid for the opening of the housing;
a main shaft fixed to one side of the drum;
a direct drive type motor connected directly to the main shaft for rotatably driving the main shaft and provided at one side of the outer tub opposite to said one side of the drum to which the main shaft is fixed; and
a hot air inlet for supplying heated air for drying to the outer tub and a main part of an air channel including a heater and a heat exchanger for condensing water vapor into water leading to the hot air inlet, said hot air inlet and main part of the channel both provided at the other side of the outer tub.

In the drum type washing/drying machine according to the invention it is possible to throw laundry in the drum from a substantially upright or obliquely upward direction because the throw-in opening is provided on the top of the housing. Therefore, it is unnecessary for a user to bend when loading or unloading the laundry in the drum as is the case with a conventional drum type washing/drying machine, and the user can easily load or unload the laundry without changing her/his standing posture. Also, laundry, which has been soaked into a liquid in a bucket in advance of washing, can be transferred from the bucket to the drum together with the liquid. Thus, the drum type washing/drying machine according to the invention is user-friendly as a whirlpool type washing machine.

Since the motor is provided at one side of the outer tub and the main part of the drying air channel is provided at the other side of the outer tub, it is possible to effectively use the space between the housing and the outer tub while keeping a good balance. As a result, it is possible to suppress the size of the housing and while enlarging the outer tub (particularly, its diameter), thereby increasing the washing capacity. Further, since the air channel and the motor are provided at opposite sides of the outer tub across the drum, the balance of weight of the outer tub becomes so good that a suspension of the outer tub is easily achieved. Furthermore, owing to the good weight balance of the outer tub, oscillation in an extracting process is effectively suppressed.

Since the direct drive method is employed for the rotational driving of the drum, noise is reduced because a belt such as a belt drive is eliminated. The direct drive method is advantageous in terms of electric power saving because the method is free from power losses otherwise caused by a slippage of the belt and so forth. In addition, with the above-described structure, an outer rotor type motor may be used for making the dimension of the housing along the axis as small as possible.

In the drum type washing/drying machine according to the invention, an air outlet which extends from the outer tub to lead to the air channel may be provided at the lower part of the body of the outer tub and at about the center in the axial direction of the body.

With the above-described structure, the heated air, which is supplied to the outer tub through the hot air inlet disposed at one side of the outer tub, flows into the drum and then passes through gaps among the laundry articles and fibers of the laundry to exit from the drum through holes provided on the body of the drum. After that, the heated air flows mainly along the gap in the peripheral direction between the drum and the outer tub to reach the air outlet, whereby the heated air exits from the outer tub. Thus, since the drum is completely surrounded by the heated air, a temperature in the drum becomes uniformly high to improve the drying efficiency. Therefore, the time required for the drying operation is shortened and nonuniform drying is avoided.

Also, since the drum is completely surrounded by the heated air in the drying operation as described above, the temperature in the drum becomes uniformly high to improve the drying efficiency. Thus, the time required for the drying operation is shortened and nonuniform drying is avoided. Further, since no air channel has to be disposed at the upper part of the outer tub, it is possible to provide the throw-in opening on a top of the outer tub. According to the above-described structure, the user can load and unload the laundry easily with keeping her/his standing posture because the user can throw the laundry in the drum from the upright or obliquely upward direction.

In the drum type washing/drying machine according to the invention , a part of the air channel, which extends from the air outlet provided on the body of the outer tub along the axial direction of the body, may be formed integrally with the outer tub.

For example, in the case where the outer tub is molded out of synthetic resin, the part of the air channel may be integrally molded with the outer tub. In this case, it is possible to reduce the manufacturing and assembling costs as compared with the case of assembling them as separate components.

In addition, in the drum type washing/drying machine according to the invention, the main part of the air channel includes a heater for heating the air and a heat exchanger to be used for dehumidifying the air evacuated from the outer tub by cooling. Either one of an air-cooling heat exchanger or a water-cooling heat exchanger may be used as the heat exchanger; however, it is preferable to use the water-cooling heat exchanger for achieving a high degree of cooling effect with a small space.

In the drum type washing/drying machine according to the invention , at least one of a detergent container and an operation panel may be disposed above the main part of the air channel. Owing to this structure, a space having the thickness of the drying air channel can be used effectively as a space for the detergent container or a space for an electrical circuit including switches and a display of the operation panel.

It should be noted that, since the heated and high-temperature air passes through the air channel, the electrical circuit of the operation panel is brought to a high temperature by the heat discharged from the air channel and it may fail. The detergent container, which is typically made of synthetic resin, may be deformed if it becomes hot due to the heat. Therefore, it is preferable to provide a thermal insulator between the main part of the air channel and the detergent container or the operation panel disposed above the main part.

A typical example of the material used as the thermal insulator is glass wool. Another example is a water pipe which passes cooling water. It functions as a heat exchanger which dehumidify the air discharged during the drying operation from the outer tub by cooling it. When a part of the water pipe is disposed between the main part of the air channel and the detergent container or the operation panel, it also functions as the thermal insulator. According to the above-described structure, it is possible to surely prevent failures of the electrical components of the operation panel or the deformation of the detergent container because the heat discharged from the air channel is absorbed by the water pipe, and is prevented from being conducted to the detergent container or the operation panel.

According to a further aspect of the present invention, a drum type washing/drying machine additionally includes:
a blower motor for blowing heated air into the outer tub in a drying operation, the blower motor provided outside the body of the outer tub in such a fashion that the shaft of blower motor being substantially perpendicular to the axis of the drum.

According to the above structure, the width of the body of the outer tub can be increased by the size of the blower motor since the blower motor is not disposed outside the outer tub. Accordingly, it is possible to widen the throw-in opening in the axial direction of the drum, thereby making it easier to load and unload the laundry in and from the drum.

Further, in this drum type washing/drying machine according to the invention, at least the upper part of the body of the outer tub may have a substantially cylindrical shape, and the blower motor may be disposed at any region near the body of the outer tub except around the top of the body.

With the above-described structure, it is possible to dispose the blower motor adequately in the space between the housing and the outer tub, which is advantageous for increasing the diameter of the outer tub while maintaining the size of the housing.

A drum type washing/drying machine can also include:
an operation controller for increasing the rotational speed of the drum to an increased speed which moves water deposited on the inner wall of the outer tub after a predetermined drying operation is finished and for maintaining the increased speed for a predetermined period of time.

Such, the rotational speed of the drum for agitating the laundry during the drying operation is almost the same as that employed in the washing process, and the rotational speed is increased when the drying operation is finished. The increased rotational speed generates an air stream which flows through the space between the drum and the outer tub at such a high speed that moves the water droplets formed on the inner wall of the outer tub. Thus, if the water is condensed during the drying operation on the inner wall of the outer tub, the high-speed air stream splashes the water or moves the water along the inner wall of the outer tub to ultimately evacuate the water from the outer tub. Therefore, no water remains on the inner wall of the outer tub when all the processes are finished, and it is possible to securely prevent the laundry from being moistened by dripping of the water deposited on the inner wall of the outer tub which may otherwise occur when the user takes the laundry out of the drum. The rotational speed for moving the water deposited on the inner wall of the outer tub may be almost the same as that employed in an extracting process, but the rotational speed may preferably be lower than that in view of the oscillation and noise. For example, if the highest rotational speed in the extracting process is 1,000 rpm, a rotational speed of 600 to 800 rpm achieves a satisfactory effect.

The moistening of the laundry by the dripping of water, which occurs when the user takes the laundry out of the drum, is particularly prominent when the throw-in opening is provided on the top of the drum. Therefore, such a drum type washing/drying machine, particularly, is suitably used as a drum type washing/drying machine having a structure wherein the throw-in opening is formed on the peripheral wall of the drum, and the opening leading to the throw-in opening and the lid for the opening of the housing are provided on the top of the housing.

### BRIEF DESCRIPTION OF THE DRAWINGS

Fig. 1 is a front view showing an appearance of an embodiment of a drum type washing/drying machine according to the present invention.
Fig. 2 is a top view showing an appearance of the drum type washing/drying machine according to the present invention.
Fig. 3 is a left side view showing an appearance of the drum type washing/drying machine according to the present invention.
Fig. 4A is a partly exploded top view showing the structure of a water supply channel in the drum type washing/drying machine according to the present invention.
Fig. 4B is a top view showing a detergent container of the drum type washing/drying machine according to the present invention.
Fig. 5 is a front longitudinal sectional view showing the main part of an inside structure of the drum type washing/drying machine according to the present invention.
Fig. 6 is a front longitudinal sectional view showing a drying air stream in the drum type washing/drying machine according to the present invention.
Fig. 7 is a left side view showing the main part of the drum type washing/drying machine according to the present invention.
Fig. 8 is a right side view showing the main part of the drum type washing/drying machine according to the present invention.
Fig. 9 is a top cross-sectional view showing the drying air stream in the drum type washing/drying machine according to the present invention.
Fig. 10 is a longitudinal sectional view showing the body of an outer tub in the drum type washing/drying machine according to the present invention.
Fig. 11 is a right side view showing a side face of the body of the outer tub of Fig. 10.
Fig. 12 is a side sectional view showing main parts around a throw-in opening in the drum type washing/drying machine according to the present invention.
Fig. 13 is a block diagram showing an electrical system of the drum type washing/drying machine according to the present invention.
Fig. 14 is a flowchart showing an example of operation of the drum type washing/drying machine according to the present invention.

### DETAILED DESCRIPTION OF PREFERRED EMBODIMENTS

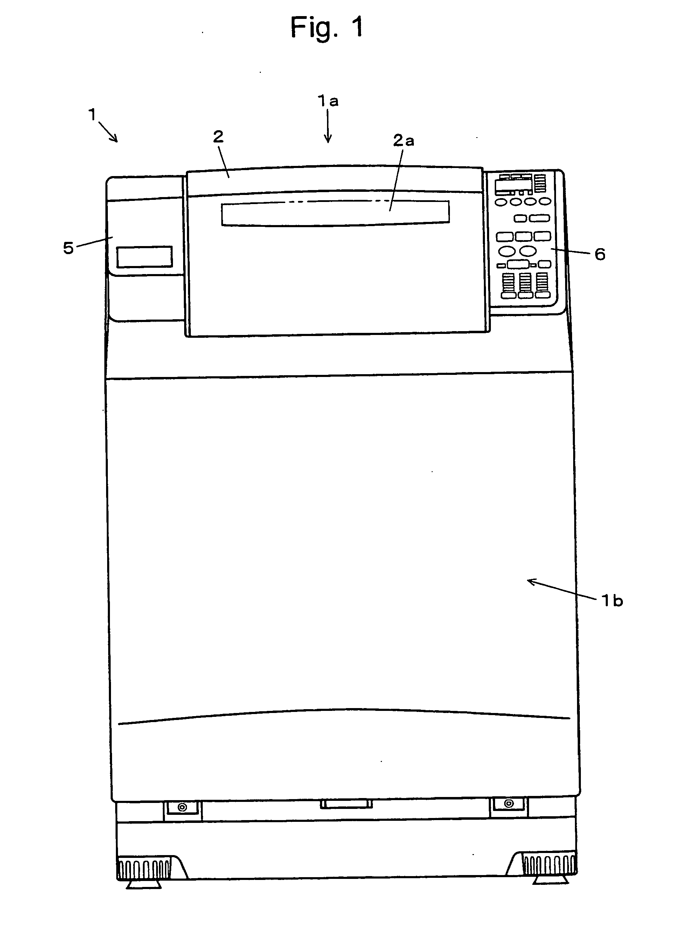

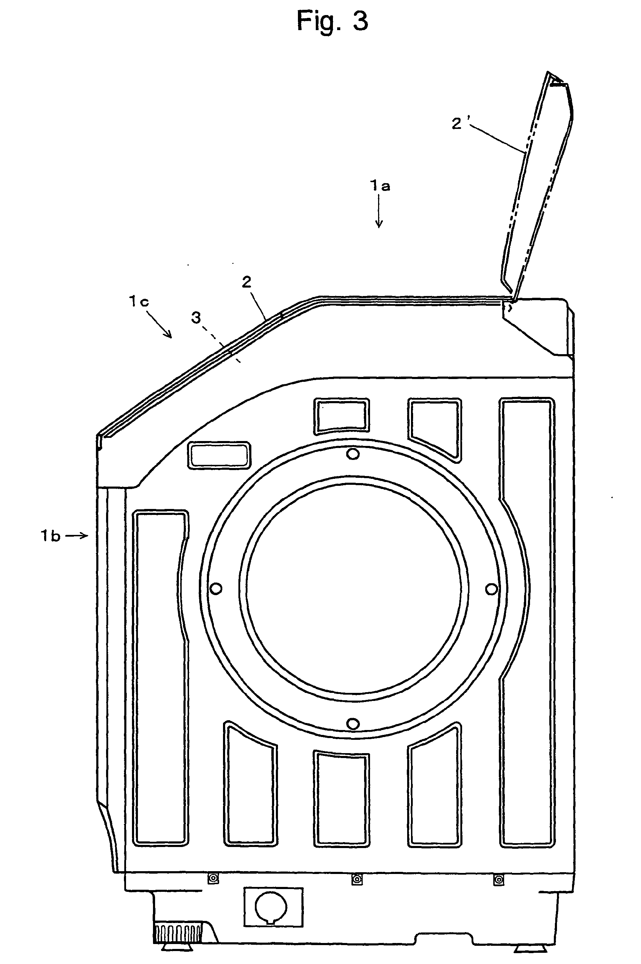

A drum type washing machine according to the first to fourth aspects of the present invention will be described with reference to the accompanying drawings. As shown in Figs. 1 to 3, a housing 1 forming an external shape of the drum type washing/drying machine includes a slating face 1c between the top face 1a and the front face 1b. The corner between the top face 1a and the slanting face 1c, and the corner between the slanting face 1c and the front race 1b are slightly rounded. A throw-in opening 3 is formed on the slanting face 1c and the top face 1a. A lid 2 is provided for the throw-in opening 3 with a horizontal hinge 4 at the rear part of the throw-in opening 3. The lid 2 is foldable upward. With the structure, when a user pulls up and pushes forward the lid 2 with a handhold 2a, the lid 2 is folded as shown by the reference numeral 2' in Fig. 3 and stands at the rear of the throw-in opening 3.

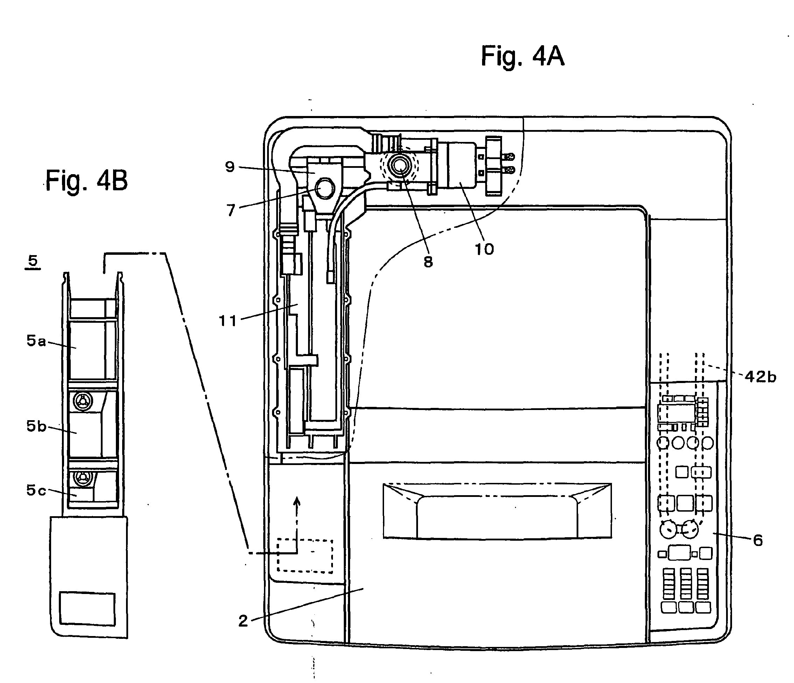

A detergent container 5 which is withdrawable frontward is provided to the left of the lid 2, and an operation panel 6 extending in the front-back direction is provided to the right of the lid 2 as shown in Figs. 4A and 4B. Various operation keys for setting washing courses, start time and so forth as well as various displays including a display which is lit responsive to the settings, a display for showing the progress (percentage of completion) in a washing course, a display for displaying the start time or a time remaining until the completion of the washing course and so forth are properly disposed on the operation panel 6. Since most part of the operation panel 6 is facing upward, its surface is almost perpendicular to the visual line of the user when the user stands in front of the washing machine and looks at the operation panel 6. Thus the displays are easy to view and the operation keys are easy to press.

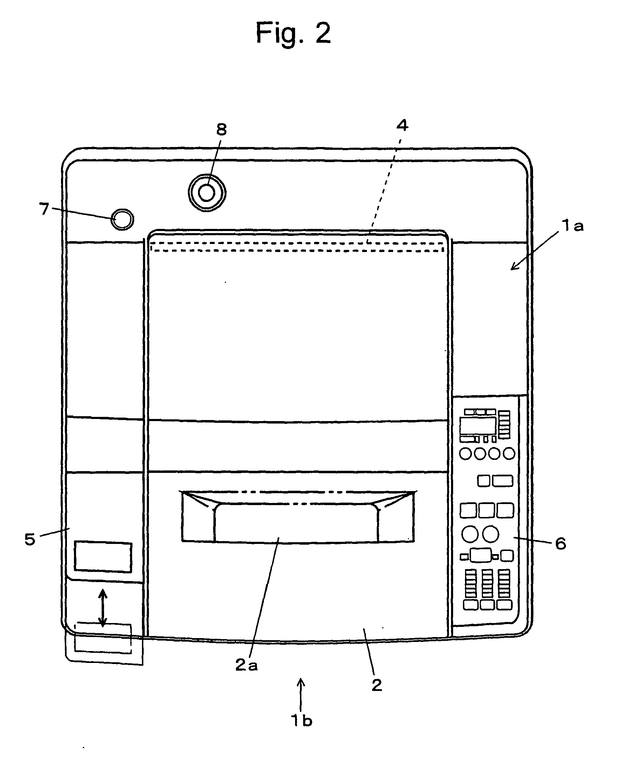

As shown in Figs. 2 and 4A, a water inlet 7 for connecting to an external water hose and a bath water inlet 8 for connecting to a bath water hose are provided at the rear part of the lid 2 on the top face 1a of the housing 1. A bath water pump 10 is disposed directly under the bath water inlet 8, and a water supply valve 9 is disposed directly under the water inlet 7. As shown in Fig. 4B, the detergent container 5 has the shape of a box whose top face as a whole is omitted, and an inside thereof is divided into a powdery detergent containing section 5a, a liquid detergent containing section 5b and a fabric softener containing section 5C.

The water supply valve 9 is a quadruple valve, and is capable of selectively performing: water supply via the powdery detergent containing section 5a and the fabric softener containing section 5b; water supply via the softener containing section 5c for the final rinsing; water supply for balance adjustment in a centrifugal extraction which will be described later; or water supply to a water pipe for water-cooling a humid air containing water vapor discharged from laundry in a drying operation which will also be described later.

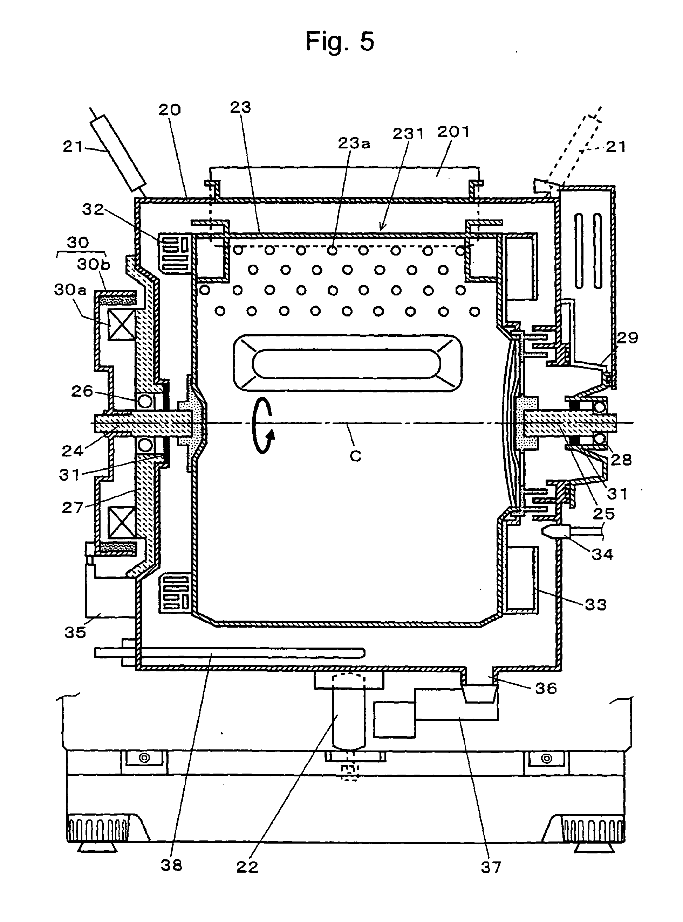

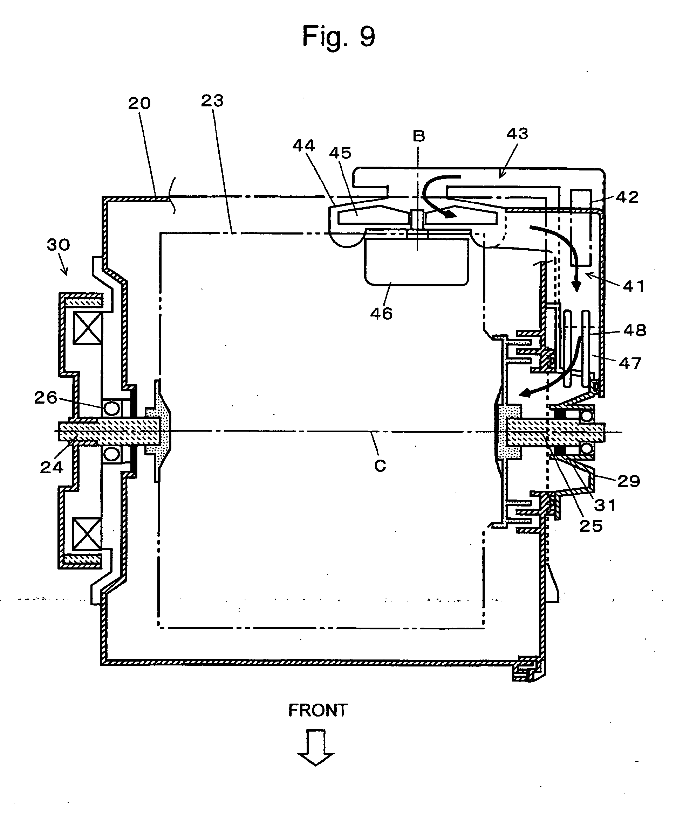

Figs. 5-12 are appropriately simplified for the convenience of following explanations. In a conventional drum type washing/drying machine, a drum with a substantially cylindrical peripheral wall is rotated about an axis extending horizontally or slightly inclined upward in the front-back direction. In the present invention, the drum type washing/drying machine is provided with a drum 23 rotated about an axis extending horizontally in the lateral direction.

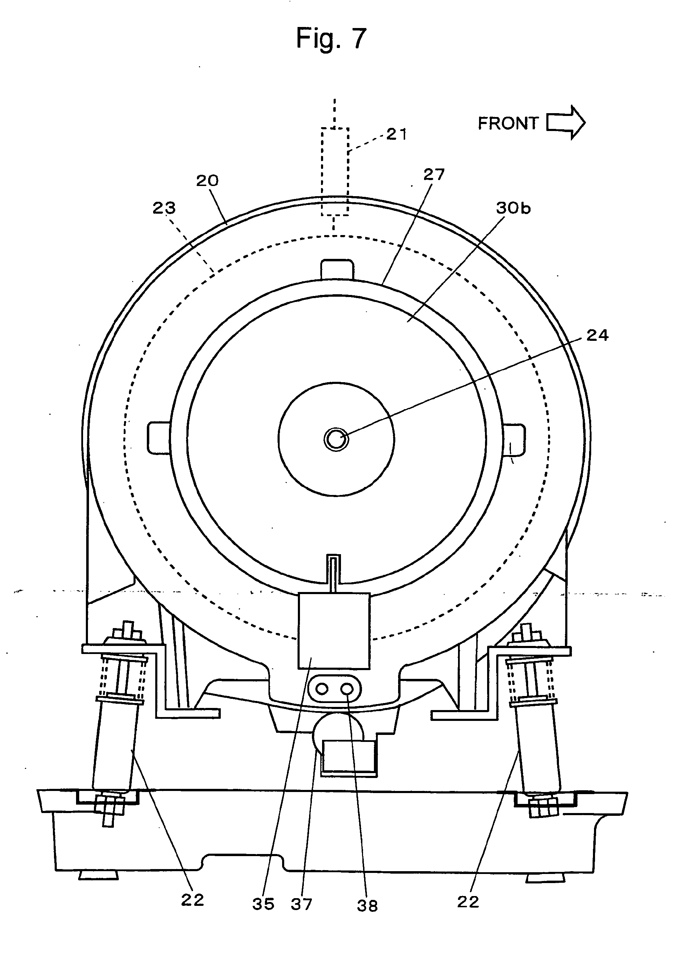

More specifically, as shown in Figs. 5 and 7, an outer tub 20 with a substantially cylindrical peripheral wall and substantially closed ends is retained inside the housing 1 by way of a pair of springs 21 and a damper 22. The springs 21 suspend and support the outer tub 20 from the right and left sides of the housing 1, and the damper 22 supports the lower part of the outer tub in the front-back direction, so that the outer tub 20 is allowed a certain degree of oscillation. The drum 23 with a substantially cylindrical peripheral wall and substantially closed ends is provided inside the outer tub 20 rotatably about a horizontal axis C extending laterally. The drum 23 is provided with many through holes 23a for passing water.

The main shaft 24 fixed to the center of the left side of the drum 23 is supported by a first bearing 26, which is retained by a first bearing case 27 fixed to the left side of the outer tub 20. An auxiliary shaft 25 fixed to the center of the right side of the drum 23 is supported by a second bearing 28, which is retained by a second bearing case 29 fixed to the right side of the outer tub 20. The main shaft 24 and the auxiliary shaft 25 define the horizontal axis C. Oil seals are provided between the main shaft 24 and the first bearing cases 27, and between the auxiliary shaft 25 and the second bearing cases 29, respectively, so that water does not reach the first and second bearings 26 and 28 when water is stored in the outer tub 20.

The motor 30 of the present embodiment is an outer rotor type direct current brushless motor, whose rotor 30b is provided at an end of the main shaft 24 projecting laterally from the left side of the outer tub 20. In turn, the stator 30a of the motor 30 is fixed to the first bearing case 27, which also functions as a motor base. The rotor 30b, which includes permanent magnets, is disposed in such a fashion as to surround the outer periphery of the stator 30a, which includes winding wires. Owing to the structure, the motor 30 is adequately thin in the direction of the horizontal axis C. Since the motor 30 is directly connected to the drum 23 with the main shaft 24 as described above, when a driving current is supplied to the stator 30a from the control circuit (not shown), the rotor 30b is rotated, and thereby the drum 23 is rotated via the main shaft 24 with the same speed.

An air channel for circulating and supplying heated air to the outer tub 20 in the drying operation is disposed between the outer tub 20 and the housing 1 (not shown in Figs. 5 and 7) around the second bearing case 29 on the opposite side of the motor 30 across the drum 23. The channel will be described in more detail later.

A drain 36 is provided at the lowermost part of the outer tub 20. The drain 36 leads to an external gutter via a drain valve 37 through a drain hose (not shown). Thus, when the drain valve 37 is opened, water retained in the outer tub 20 is evacuated from the machine through the drain 36 and the drain hose. Also, a heater 38 extending substantially horizontally is disposed under the outer tub 20 to heat the water retained in the outer tub 20.

Since the drum 23 is supported not by a cantilever manner but by both sides as described above, the drum 23 has less tendency to sway even if the laundry is huddled up in the drum by the extracting process. However, two balancers are used for steadily suppressing the swaying. One of them is a fluid balancer 32 disposed on the left of the drum 23 where the motor 30 is also mounted. The fluid balancer 32 has a function substantially similar to that of a balancing ring used in conventional whirlpool type washing machines, which suppresses the swaying of the drum 23 by properly controlling the movement of fluid in a circular hollow body.

In turn, a plurality of water storage tanks 33, each in the form of a pocket opened to the inside of the drum 23, are radially attached to the circumference of the right side of the drum 23, opposite to the fluid balancer across the drum 23. The water storage tanks 33 constitute a variable weight type balance adjustment mechanism together with a nozzle 34 for ejecting water to the openings, a water supply channel for supplying water from the water supply valve 9 to the nozzle 34 and so forth. More specifically, when the drum 23 is at a predetermined rotating position, water is ejected from the nozzle 34 to a water storage tank 33 in front of the nozzle 34. The water is held in the water storage tank 33 by the centrifugal force, and its weight functions as an eccentric load of the drum 23. Thus, it is possible to alleviate the eccentricity of the whole drum 23 by appropriately ejecting water to the water storage tank positioned opposite to the eccentric load generated by the laundry huddled in the drum 23 across the horizontal axis C. As for the balance adjustment method and specific structure thereof, those proposed by the present applicant in Japanese Patent Application No. 2001-161855 can be employed in the present invention.

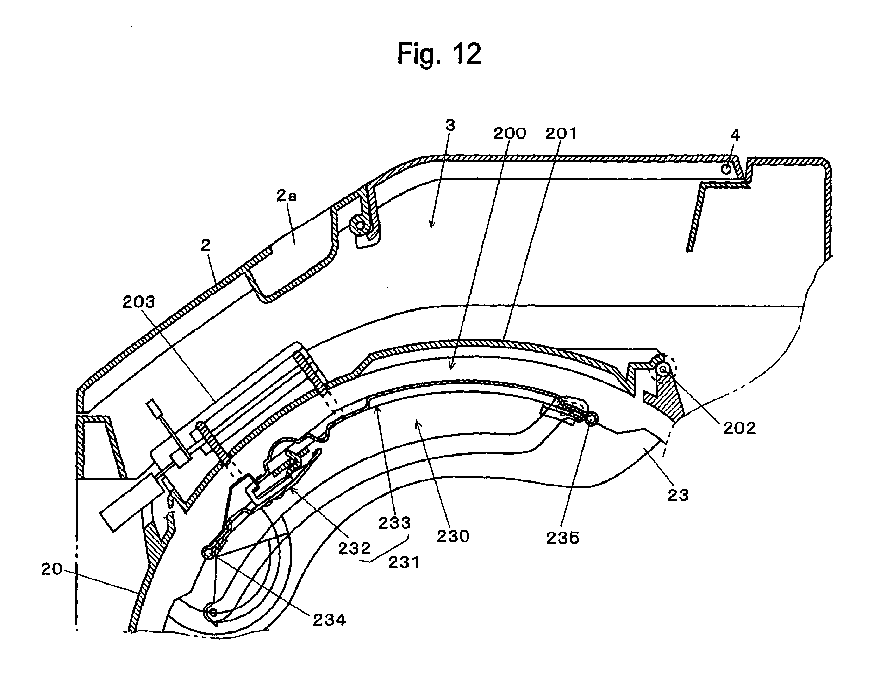

As shown in Fig. 12, the upper part of the periphery of the outer tub 20 lies just under the lid 2 of the throw-in opening 3, and the drum 23 is placed inside the outer tub 20. An outer tub opening 200 on the periphery of the outer tub 20 and a drum opening 230 on the periphery of the drum 23 are positioned slightly frontward from the upright direction. An outer tub door 201 is disposed for closing the outer tub opening 200. The outer tub door 201 is composed of a panel which opens rearward as being rotated about a shaft 202 extending substantially in parallel with the horizontal axis C. In turn, the drum door 231 for closing the drum opening 230 is composed of a pair of panels 232 and 233. The door panels 232 and 233 are respectively hinged to the periphery of the drum at opposite ends with respective shafts 234 and 235 which are substantially parallel with the horizontal axis C. The door panels 232 and 233 open frontward and rearward respectively. When the user opens the lid 2 to load laundry in the drum 23, the outer tub door 201 and the drum door 231 need to be opened too. In the present washing machine, the opening operation is simplified by a door opening/closing mechanism 203 of the outer tub door 201. Owing to the door opening/closing mechanism 203, the outer tub door 201 and the drum door 231 can simultaneously be opened/closed simply by opening/closing the outer tub door 201 and performing a lock/unlock operation of the outer tub door 201.

Since the drum 23 is rotated inside the outer tub 20, it is necessary that the position of the drum opening 230 coincides with the position of the outer tub opening 200 when the drum 23 is stopped. Therefore, a drum position fixing unit 35 is disposed on the left side of the outer tub 20, so that the stop position hinges on a meshing of an engagement projection which projects from the unit 35 and an engagement recess formed on the rotor 30b of the motor 30.

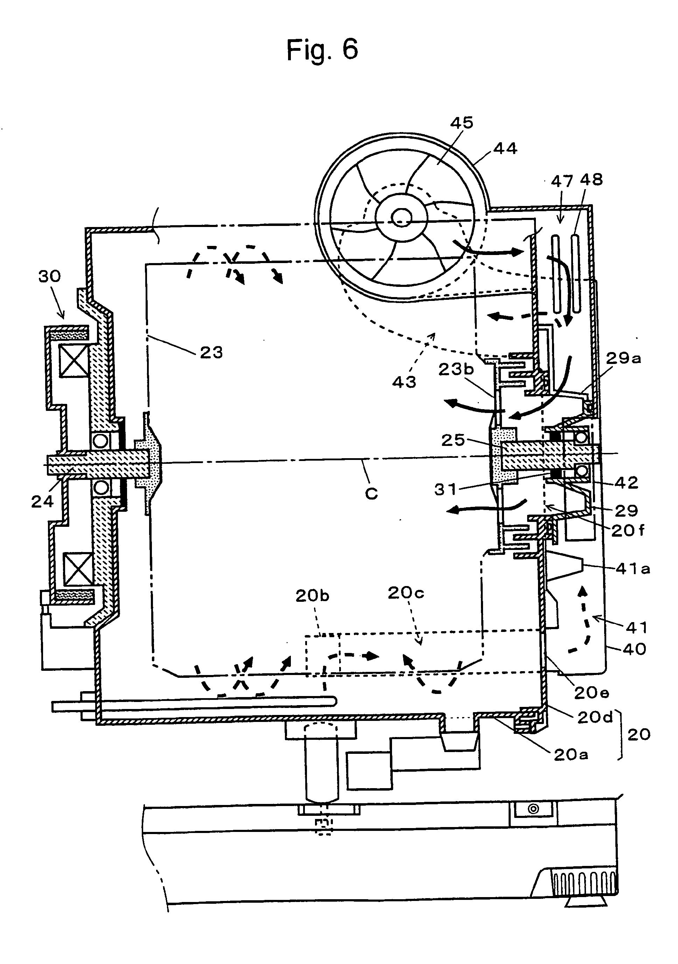

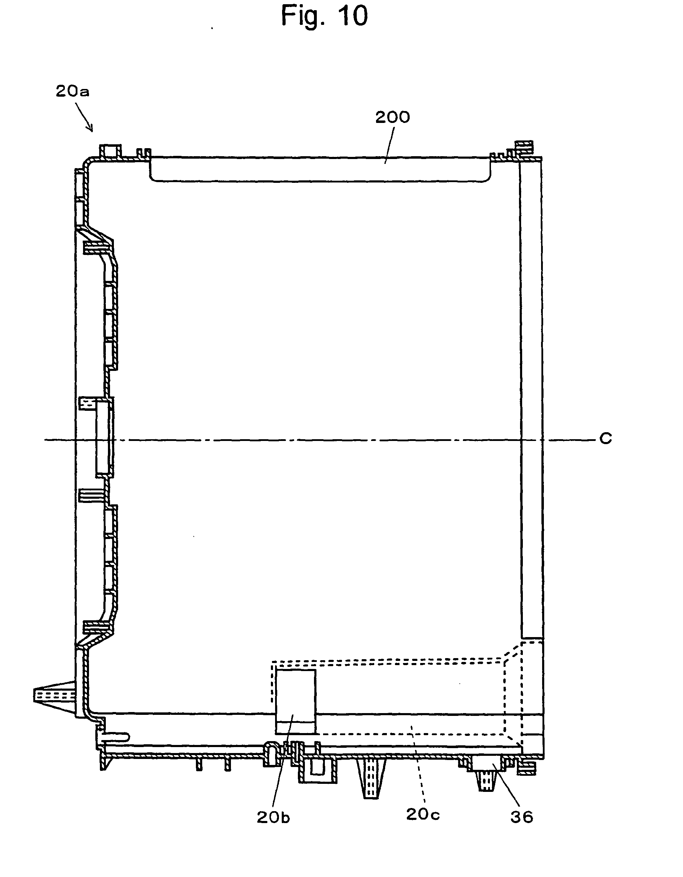

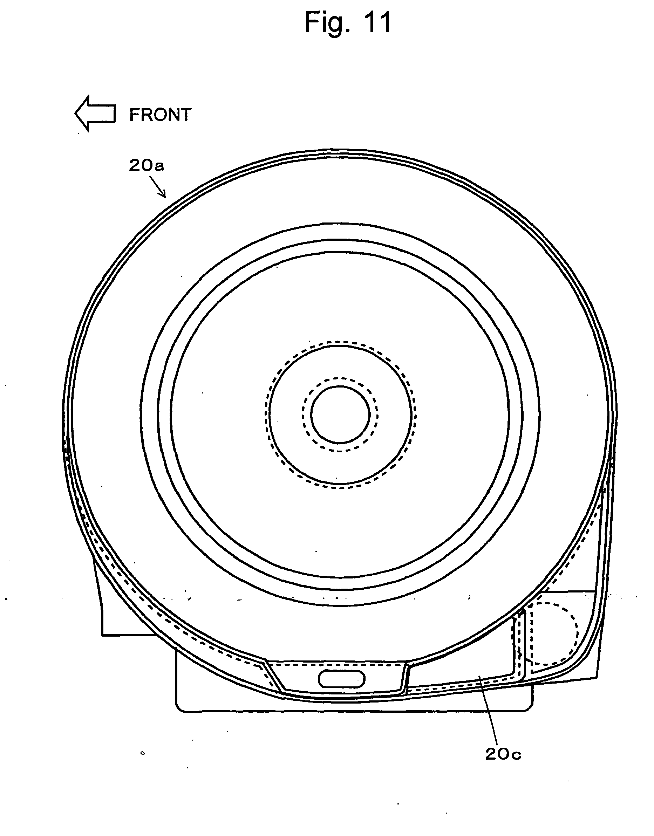

The structure of the drying air channel will hereinafter be described in detail with reference to Figs. 6 and 8-11. The body 20a of the outer tub is formed by an integral molding of synthetic resin, where the left side thereof is substantially closed and the right side thereof is opened, as shown in Figs. 10 and 11. The body 20a has an opening 20b under the substantially center of the horizontal axis C for communication with the inside of the outer tub 20 and a tubular pipeline 20c which is integrated therewith and extends along the horizontal axis C to the right side. The opening 20b serves as an air outlet for the outer tub 20, and the pipeline 20c serves as a part of the air channel.

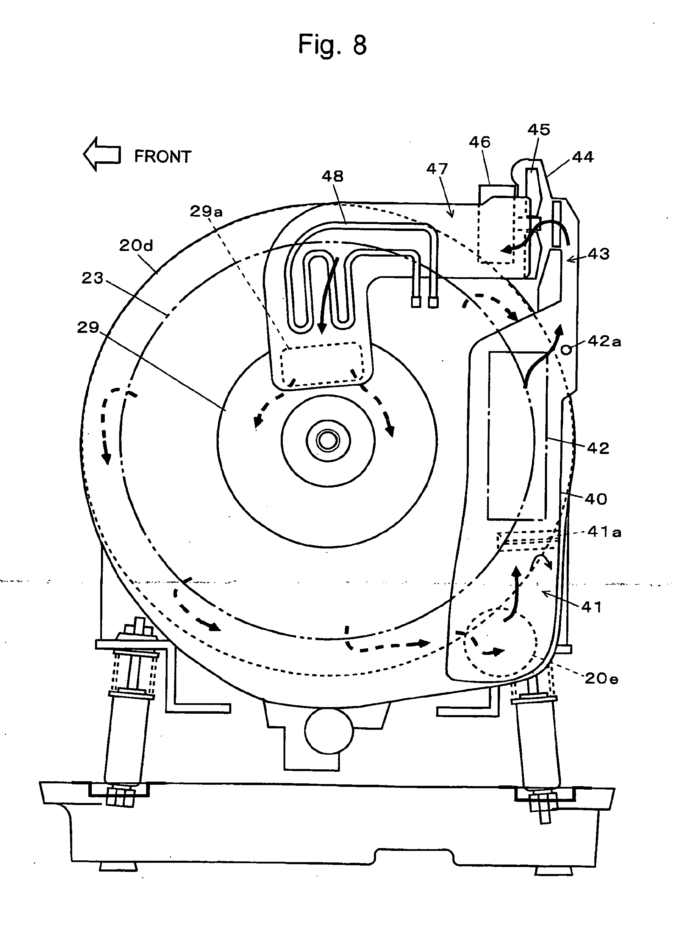

As shown in Figs. 6 and 8, an end member 20d for substantially closing the right side is attached to the right opening side of the body 20a of the outer tub 20. A circular opening 20e is provided on a part of the outer tub 20 corresponding to the pipeline 20c, and a heat exchanger cover 40 is attached to the opening 20e. Inside the heat exchanger cover 40, a rear vertical ventilation passage 41 serves as a part of the air channel and extends substantially vertically along the right side of the outer tub 20. A water pipe (not shown) connected with the water supply valve 9 leads to a water pipe connecting hole 42a disposed above the heat exchanger cover 40, and the rear vertical ventilation passage 41 functions substantially as a heat exchanger 42 owing to water supplied thereto from the water pipe.

The rear vertical ventilation passage 41 is narrowed by a projection 41a and, therefore, water supplied from the water pipe spouts out to enhance the cooling effect (i.e. heat exchanging effect) as well as to prevent contaminants such as lint from coming up along with an ascending air stream.

As shown in Figs. 6, 8 and 9, the rear vertical ventilation passage 41 is connected with a rear horizontal ventilation passage 43 which extends slightly upward at an upper rear part of the outer tub 20, and the rear horizontal ventilation passage 43 is connected with a rear part of a blower chamber 44 in which a blower 45 is installed. The blower 45 is directly connected with a motor shaft of a blower motor 46. A horizontal ventilation passage 47 extending substantially horizontally and bending frontward at the outside of the outer tub 20 and then downward is connected to the right side of the blower chamber 44. The horizontal ventilation passage 47 is provided in such a fashion that an end thereof overlaps with the opening 29a of the second bearing case 29. A heater 48 composed of a seethed wiring is provided in the horizontal ventilation passage 47, so that the passage 47 serves substantially as a heater for heating air. A plurality of openings 20f are provided on a portion of the outer tub 20 inside the second bearing case 29, and the openings 20f serve as hot air inlets.

Since the horizontal ventilation passage 47 needs to be highly heat resistant in view of the high temperature inside the passage 47, metal is used as the material for forming the passage 47. Since the temperature of the air passing through the rear vertical ventilation passage 41 and the rear horizontal ventilation passage 43 is lower than that passing through the passage 47, the rear vertical ventilation passage 41 and the rear horizontal ventilation passage 43 are made of synthetic resin. Among parts constituting the blower chamber 44, those disposed at the side of the motor 46 are made of metal and those disposed at the side of the rear horizontal ventilation 43 are made of synthetic resin. Metal is used because the parts exposed to the motor 46 requires to be rigid, in addition to heat resistant, in order to sustain the heavy motor 46.

In the above-described structure, when the blower 45 is driven to rotate by the blower motor 46, the blower 45 inhales air from its rear and exhales the air to lateral sides thereof. Accordingly, an air stream advancing from the blower chamber 44 to the horizontal ventilation passage 47 is formed, and the air heated as passing through the horizontal ventilation passage 47 is blown into the outer tub 20 through the openings 20f serving as the hot air inlets of the outer tub 20. A plurality of openings 23b are provided on one side of the drum 23 at around the auxiliary shaft 25, and the heated air passes mainly through the openings 23b to flow into the drum 23. If wet laundry is loaded in the drum 23, the heated air passes through gaps among the laundry articles and among fibers to deprive the laundry of moisture. Air containing the moisture passes mainly through the water passing holes 23a, exits the drum 23 and then advances toward the air outlet 20b through the gap between the drum 23 and the outer tub 20. Such flow of air around the drum 23 is promoted by the rotation of the drum 23. Since the high temperature air flow in the drum 23 surrounds the drum 23, the temperature inside the drum 23 becomes adequately high so that a high drying efficiency is achieved.

The air containing a large amount of water vapor, which has been evacuated from the outer tub 20 via the air outlet 20b, is subjected to a rapid cooling when it reaches the heat exchanger 42 through the pipeline 20c and the rear horizontal ventilation passage 41, whereby the water vapor contained in the air is condensed to water. Therefore, the air that has passed through the heat exchanger 42 becomes dry and returns to the blower chamber 44 after passing through the rear horizontal ventilation passage 43, so that the dry air is circulated to be heated again by the heater 48. The water generated by the condensation in the heat exchanger 42 slides down along the inner wall of the heat exchanger cover 40 and is discharged from a discharge outlet (not shown). In addition, the discharge outlet is formed in a gap between the body 20a and the end member 20d.

As described above, the drying air channel is arranged mainly at the outside and the right side of the outer tub 20. More specifically, since the motor 30 is provided at the left side of the outer tub 20 and the air channel is provided at the right side of the outer tub 20, the lateral balance of the outer tub 20 is well achieved. Accordingly, suspension by the springs 21 is easily performed without problem while swaying in the extracting process is suppressed. Further, since the space around the second bearing case 29 is adequately utilized for arranging the air channel, the space between the outer tub 20 and the housing 1 is effectively used. Moreover, since the blower 45 and the blower motor 46 are disposed in the rear of the body of the outer tub 20 in such a fashion that its axis B is horizontal and substantially perpendicular to the horizontal axis C, the space between the body of the outer tub 20 and the housing 1 is also effectively used. By using the space between the outer tub 20 and the housing 1 effectively as described above, it is possible to downsize the housing 1 while enlarging the outer tub 20, whereby ultimately the washing capacity is increased.

As can be seen from Figs. 1 to 5, the detergent container is disposed just above the first bearing case 27 and the motor 30 in the drum type washing/drying machine of the present invention. Accordingly, the space inside the housing 1 corresponding to the thickness of the motor 30 can be used effectively. In turn, since the operation panel 6 is disposed just above the horizontal ventilation passage 47 which is a part of the air channel on the right of the outer tub 20, the space in the housing 1 corresponding to the operation panel 6 can also be used effectively.

In the drying operation, the wall of the horizontal ventilation passage 47 on which the heater 48 is installed becomes particularly hot. In order to prevent the heat discharged from the wall from affecting the operation panel 6 disposed just above the horizontal ventilation passage 47, the water pipe 42b extending from the water supply valve 9 to the heat exchanger 42 is designed to pass under the operation panel 6. Accordingly, since cooling water passes through the water pipe 42b during the drying operation, the water pipe 42b functions as a thermal insulator to shield the heat from the wall of the horizontal ventilation passage 47 lying underneath, thereby preventing the operation panel from being abnormally heated.

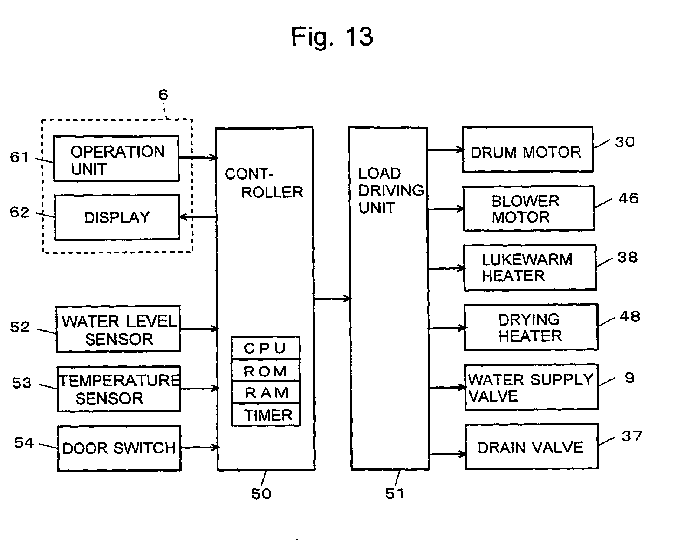

Configuration of the electrical system and a characteristic operation of the washing/drying machine of the present invention will hereinafter be described. Fig. 13 is a block diagram showing the electrical system of the washing/drying machine. A controller 50 uses a microcomputer including a CPU, ROM, RAM, timer and so forth and performs various control operations such as operation of processes relating to washing/drying as described later based on a control program stored in the ROM. The controller is connected to: an operation unit 61 which is used by a user when determining the settings and giving instructions; a display 62 with which the user can confirm the settings and operation state; a water level sensor 52 for detecting the level of water stored in the outer tub 20; temperature sensors 53 for detecting temperatures of the water and air; a door switch 54 for detecting whether the lid 2 is opened or closed; and so forth. A load driving unit 51 is also connected to the controller 50, and the drum motor 30, the blower motor 46, the heater for lukewarm water 38, the drying heater 48, the water supply valve 9, the drain valve 37 and so forth are controlled by way of the load driving unit 51.

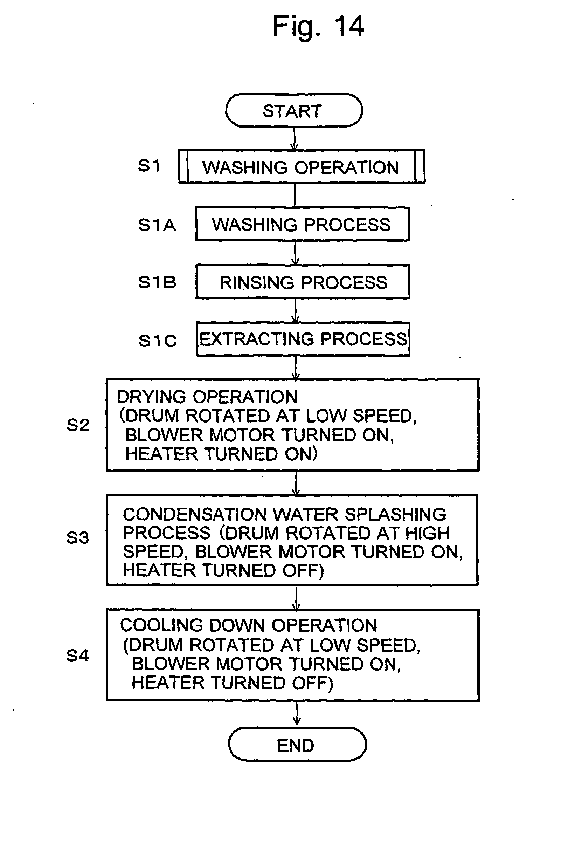

An example of the operation of the washing/drying machine will hereinafter be described with reference to a flowchart of Fig. 14. The following operation is a standard automatic operation, wherein process steps from the start to the end of a washing/drying operation are continuously performed.

The user opens the lid 2 and then opens the outer tub door 201 and the drum door 231 to throw laundry into the drum 23. The user fills the detergent container with a detergent and a fabric softener, and then operates the operation panel 6 to input instructions for a washing/drying operation. The controller 50 starts a washing operation responsive to the instructions (Step S1). In the washing operation, bath water or water supplied from the external supply tap is poured into the outer tub 20 via the detergent container 5. At this point, the drain valve 37 is closed, and the washing water dissolving the detergent contained in the detergent container 5 is stored in the outer tub 20. The water stored in the outer tub 20 flows into the drum 23 through the through holes 23a, etc., whereby the laundry is soaked in the water. To start a washing process, a driving current is supplied to the stator 30a of the motor 30 to rotate the drum 23 in a predetermined rotational direction at a predetermined speed. Thus, the laundry is tumbled inside the drum 23 (Step S1A).

After the washing process is finished, a rinsing process is performed in the similar manner (Step S1B), followed by an extracting process (Step S1C). In the extracting process, the rotational speed of the motor 30 is raised to about 1,000 rpm to rotate the drum 23 at the same speed, whereby a centrifugal extraction is achieved. In the centrifugal extraction, the fluid balancer 32, in addition to the balance adjustment mechanism including the water storage tanks 33 when necessary, works to prevent the drum 23, the outer tub 20, and the housing 1 from oscillating violently. It is possible to perform a moderate extraction after the washing process or after a rinsing process except the final one.

When the washing operation is finished, the operation proceeds to a drying operation (Step S2). In the drying operation, the blower motor 46 is first tuned on, and the drying heater 48 is turned on after a certain period, 5 seconds for example, from the actuation of the blower motor 46. Since the controller 50 detects the start of rotation of the blower motor 46 during the period, it is assured that the heating is started only after the blower motor 46 is actuated and the air stream is generated in the air channel. When the drying heater 48 is turned on, heated air produced by the heater 48 is blown into the drum 23 as described above. Also, the drum 23 is rotated at a slow speed similar to that employed in the washing process, so that the laundry is adequately agitated to be equally exposed to the heated air. Humid air containing moisture evaporated from the wet laundry is cooled and the water vapor is condensed to water in the heat exchanger 42 so that the air is dried and heated again by the heater 48.

The temperature sensors 53 are provided in the vicinity of the opening 20b which is the air outlet from the outer tub 20 and in the vicinity of a sealing portion of a joint of the pipeline 20c and the heat exchanger cover, respectively. Since water stagnated near the discharge rests in the vicinity of the joint and the latter temperature sensor is almost always submerged in water during the drying operation in actual use, the latter temperature sensor detects the temperature of the water. The controller 50 judges the degree of drying of the laundry based on a difference between the temperatures detected by the temperature sensors 53 and terminates the drying operation when the temperature difference exceeds a predetermined value.

After the drying operation, a condensed water splashing process is performed (Step S3). The high temperature air containing a large amount of water vapor passes through the gap between the outer tub 20 and the drum 23 in the above described drying operation. The inner wall of the outer tub 20 is heated by the air, while the temperature of the air outside the outer tub 20 is the same as or lower than and close to the room temperature. Therefore, the outer tub 20 itself acts like a heat exchanger, and the condensed water is deposited on the inner wall of the outer tub 20. If such condensed water is deposited on the underside of the outer tub door 201, the water may drop on the drum 23 and moisten the laundry which has been dried. This may happen due to a vibration caused by the user when the user opens the door after the washing/drying operation is finished. The condensed water splashing operation is performed to prevent such an undesired moistening of the laundry, wherein the drum 23 is rotated at a high rotational speed of about 600 to 800 rpm.

A remarkably high-speed air stream occurs in the gap between the drum 23 and the outer tub 20 when the drum is rotated at the high speed. Therefore, the condensed water deposited on the inner wall of the outer tub 20 is caught up in the air stream and becomes fine water droplets to be drained off or the condensed water is moved along the inner wall of the outer tub 20 by the air stream to be a large condensation and drained off. A cooling down process is performed (Step S4) after the condensed water splashing process has been performed for a predetermined period (e.g., 1 to 3 minutes). The cooling down process is performed for the purpose of reducing a temperature of the laundry, wherein cooled air, which is prepared by the use of cooling water prepared in the heat exchanger by driving the blower motor 46 without performing the heating by the heater 48, is circulated inside the drum 23.

After completion of the cooling down process of a predetermined period, the blower motor 46 and the drum motor 30 are tuned off to finish the washing/drying operation. When all the processes are finished, the user is informed of the completion by an appropriate display or buzzer. The user then opens the lid 2 to open the doors of the outer tub 20 and the drum 23 and takes out the laundry from the drum 23.

As described above, the condensed water is perfectly eliminated when the user takes the laundry out of the drum 23 even if the condensed water has deposited on the outer tub door 201 and/or the inner wall of the outer tub 20 at the time when the drying operation is finished. Therefore, the dried laundry will not be moistened by the dripping of the condensed water.

## Claims

1. A drum type washing/drying machine comprising:
a housing (1);
an outer tub (20) having a body (20a) with a substantially cylindrical peripheral wall enclosed in the housing (1);
a drum (23) with a substantially cylindrical peripheral wall mounted rotatably about a horizontal (C) or inclined axis in the outer tub (20);
a throw-in opening (3) formed on the peripheral wall of the drum (23);
an opening formed on a top of the housing (1), the opening of the housing (1) leading to the throw-in opening (3);
a lid (2) for the opening of the housing (1);
a main shaft (24) fixed to one side of the drum (23);
a hot air inlet (20f) for supplying heated air for drying to the outer tub (20);
**characterized by**
a direct drive type motor (30) connected directly to the main shaft for rotatably driving the main shaft (24) and provided at one side of the outer tub (20) opposite to said one side of the drum (23) to which the main shaft (24) is fixed;
and
a main part (41, 47) of an air channel including a heater (47, 48) and a heat exchanger (42) for condensing water vapor into water and leading to the hot air inlet (20f), said hot air inlet (20f) and main part (41, 47) of the air channel both provided at the other side of the outer tub (20).

2. The drum type washing/drying machine according to claim 1, wherein an air outlet (20b) leading to the air channel from the outer tub (20) is provided at a portion which is on a lower part of the body (20a) of the outer tub (20) and near the center along the axial direction of the body (20a).

3. The drum type washing/drying machine according to claim 1 or 2, wherein a channel (20c), which is a part of the air channel, extending from the air outlet (20b) provided on the body (20a) of the outer tub (20) in the axial direction of the body (20a) is formed integrally with the outer tub (20).

4. The drum type washing/drying machine according to one of the preceding claims, wherein at least one of a detergent container (5) and an operation panel (6) is disposed above the main part (41, 47) of the air channel.

5. The drum type washing/drying machine according to claim 4, wherein a thermal insulator is provided between the main part of the air channel and the detergent container (5) and/or the operation panel (6) disposed above the main part (41, 47) of the air channel.

6. The drum type washing/drying machine according to claim 5, wherein the drum type washing/drying machine further comprises a water pipe (42b) for passing cooling water to be used as a heat exchanger for dehumidifying air exhausted from the outer tub (20) by cooling in the drying operation, a part of the water pipe (42b) disposed between the main part (41, 47) of the air channel and the detergent container (5) and/or the operation panel (6) as the thermal insulator.

7. The drum type washing/drying machine according to one of the preceding claims, comprising:
a blower motor (46) for blowing heated air into the outer tub (20) during a drying operation, the blower motor (46) provided outside a body (20a) of the outer tub (20) in such a fashion that a shaft of the blower motor (46) is substantially perpendicular to an extending direction of the axis of the drum (23).

8. The drum type washing/drying machine according to claim 7, wherein at least an upper part of the body (20a) of the outer tub (20) has a substantially cylindrical shape, and the blower motor (46) is disposed at any region adjacent to the body (20a) of the outer tub (20) but regions around a top of the body (20a).

## Patentansprüche

1. Trommelwasch-/-trocknungsmaschine, umfassend:
ein Gehäuse (1);
einen äußeren Bottich (20) mit einem Körper (20a) mit einer im Wesentlichen zylindrischen peripheren Wand, umgeben von dem Gehäuse (1);
eine Trommel (23) mit einer im Wesentlichen zylindrischen peripheren Wand, drehbar montiert um eine horizontale (C) oder geneigte Achse in dem äußeren Bottich (20);
eine in der peripheren Wand der Trommel (23) gebildete Einwurföffnung (3);
eine in einem oberen Teil des Gehäuses (1) gebildete Öffnung, wobei die Öffnung des Gehäuses (1) zu der Einwurföffnung (3) führt;
einen Deckel (2) für die Öffnung des Gehäuses (1);
eine an einer Seite der Trommel (23) befestigte Hauptwelle (24);
einen Heißlufteinlass (20f) zum Zuführen von erwärmter Luft zum Trocknen zu dem äußeren Bottich (20);
**gekennzeichnet durch**
einen Direktantriebsmotor (30), welcher direkt mit der Hauptwelle verbunden ist zum rotatorischen Antreiben der Hauptwelle (24) und auf einer Seite des äußeren Bottichs (20) bereitgestellt ist, die der Seite der Trommel (23), an der die Hauptwelle (24) befestigt ist, gegenüberliegt;
und
einen Hauptteil (41, 47) eines Luftkanals, welcher eine Heizvorrichtung (47, 48) und einen Wärmetauscher (42) zum Kondensieren von Wasserdampf zu Wasser umfasst und zu dem Heißlufteinlass (20f) führt, wobei sowohl der Heißlufteinlass (20f) als auch der Hauptteil (41, 47) des Luftkanals auf der anderen Seite des äußeren Bottichs (20) bereitgestellt sind.

2. Trommelwasch-/-trocknungsmaschine nach Anspruch 1, wobei ein von dem äußeren Bottich (20) zu dem Luftkanal führender Luftauslass (20b) in einem Bereich bereitgestellt ist, der in einem unteren Teil des Körpers (20a) des äußeren Bottichs (20) und in der Nähe des Zentrums entlang der Axialrichtung des Körpers (20a) liegt.

3. Trommelwasch-/-trocknungsmaschine nach Anspruch 1 oder 2, wobei ein Kanal (20c), der Teil des Luftkanals ist und sich von dem an dem Körper (20a) des äußeren Bottichs (20) bereitgestellten Luftauslass (20b) in der Axialrichtung des Körpers (20a) erstreckt, integral geformt mit dem äußeren Bottich (20) ausgebildet ist.

4. Trommelwasch-/-trocknungsmaschine nach einem der vorstehenden Ansprüche, wobei ein Waschmittelbehälter (5) und/oder eine Bedientafel (6) oberhalb des Hauptteils (41, 47) des Luftkanals angeordnet ist.

5. Trommelwasch-/-trocknungsmaschine nach Anspruch 4, wobei ein Wärmeisolator zwischen dem Hauptteil des Luftkanals und dem oberhalb des Hauptteils (41, 47) des Luftkanals angeordneten Waschmittelbehälter (5) und/oder Bedientafel (6) bereitgestellt ist.

6. Trommelwasch-/-trocknungsmaschine nach Anspruch 5, wobei die Trommelwasch-/trocknungsmaschine ferner umfasst: ein Wasserrohr (42b) zum Passierenlassen von Kühlwasser zur Verwendung als Wärmetauscher zum Entfeuchten von aus dem äußeren Bottich (20) abströmender Luft durch Kühlen in dem Trocknungsvorgang, wobei ein Teil des Wasserrohrs (42b) zwischen dem Hauptteil (41, 47) des Luftkanals und dem Waschmittelbehälter (5) und/oder der Bedientafel (6) als der Wärmeisolator angeordnet ist.

7. Trommelwasch-/-trocknungsmaschine nach einem der vorstehenden Ansprüche, umfassend:
einen Bläsermotor (46) zum Blasen von erwärmter Luft in den äußeren Bottich (20) während eines Trocknungsvorgangs, wobei der Bläsermotor (46) außerhalb eines Körpers (20a) des äußeren Bottichs (20) derart bereitgestellt ist, dass eine Welle des Bläsermotors (46) im Wesentlichen senkrecht zu einer Erstreckungsrichtung der Achse der Trommel (23) ist.

8. Trommelwasch-/-trocknungsmaschine nach Anspruch 7, wobei mindestens ein oberer Teil des Körpers (20a) des äußeren Bottichs (20) eine im Wesentlichen zylindrische Gestalt aufweist und wobei der Bläsermotor (46) in einem beliebigen Bereich benachbart zu dem Körper (20a) des äußeren Bottichs (20) angeordnet ist, mit Ausnahme von Bereichen um einen oberen Teil des Körpers (20a).

## Revendications

1. Machine à laver/à sécher de type à tambour comprenant :
un carter (1) ;
une cuve extérieure (20) comprenant un corps (20a) avec une paroi périphérique sensiblement cylindrique enfermée dans le carter (1) ;
un tambour (23) avec une paroi périphérique sensiblement cylindrique montée en rotation autour d'un axe horizontal (C) ou incliné dans la cuve extérieure (20) ;
une ouverture de chargement (3) formée sur la paroi périphérique du tambour (23) ;
une ouverture formée sur une partie supérieure du carter (1), l'ouverture du carter (1) menant à l'ouverture d'entrée (3) ;
un couvercle (2) pour l'ouverture du carter (1) ;
un arbre principal (24) fixé à un côté du tambour (23) ;
un orifice d'entrée d'air chaud (20f) destiné à fournir de l'air chauffé pour sécher vers la cuve extérieure (20) ;
**caractérisée en ce qu'**elle comprend
un moteur de type à entraînement direct (30) raccordé directement à l'arbre principal pour entraîner en rotation l'arbre principal (24) et prévu au niveau d'un premier côté de la cuve extérieure (20) opposée au dit premier côté du tambour (23) auquel l'arbre principal (24) est fixé ; et
une partie principale (41, 47) d'un canal d'air comprenant un dispositif de chauffage (47, 48) et un échangeur de chaleur (42) destiné à condenser la vapeur d'eau en eau et menant à l'orifice d'entrée d'air chaud (20f), ledit orifice d'entrée d'air chaud (20f) et la partie principale (41, 47) du canal d'air étant tous deux prévus au niveau de l'autre côté de la cuve extérieure (20).

2. Machine à laver/à sécher de type à tambour selon la revendication 1, dans lequel un orifice de sortie d'air (20b) menant au canal d'air depuis la cuve extérieure (20) est prévu au niveau d'une partie qui se trouve sur une partie inférieure du corps (20a) de la cuve extérieure (20) et à proximité du centre le long de la direction axiale du corps (20a).

3. Machine à laver/à sécher de type à tambour selon la revendication 1 ou 2, dans lequel un canal (20c), qui fait partie du canal d'air, s'étendant depuis l'orifice de sortie d'air (20b) prévu sur le corps (20a) de la cuve extérieure (20) dans la direction axiale du corps (20a) est formé d'un seul tenant avec la cuve extérieure (20).

4. Machine à laver/à sécher de type à tambour selon l'une quelconque des revendications précédentes, dans lequel au moins un d'un conteneur à détergent (5) et un tableau de commande (6) est disposé au-dessus de la partie principale (41, 47) du canal d'air.

5. Machine à laver/à sécher de type à tambour selon la revendication 4, dans lequel un isolateur thermique est prévu entre la partie principale du canal d'air et le conteneur à détergent (5) et/ou le tableau de commande (6) disposés au-dessus de la partie principale (41, 47) du canal d'air.

6. Machine à laver/à sécher de type à tambour selon la revendication 5, dans lequel la machine à laver/à sécher de type à tambour comprend en outre une conduite d'eau (42b) destinée à faire passer de l'eau de refroidissement à utiliser comme échangeur thermique pour déshumidifier de l'air évacué de la cuve extérieure (20) en refroidissant pendant l'opération de séchage, une partie de la conduite d'eau (42b) étant disposée entre la partie principale (41, 47) du canal d'air et le conteneur à détergent (5) et/ou le tableau de commande (6) comme isolant thermique.

7. Machine à laver/à sécher de type à tambour selon l'une quelconque des revendications précédentes, comprenant :
un moteur de soufflerie (46) destiné à souffler l'air chauffé dans la cuve extérieure (20) pendant une opération de séchage, le moteur de soufflerie (46) étant prévu à l'extérieur d'un corps (20a) de la cuve extérieure (20) de telle manière qu'un arbre du moteur de soufflerie (46) est sensiblement perpendiculaire à une direction d'extension de l'axe du tambour (23).

8. Machine à laver/à sécher de type à tambour selon la revendication 7, dans lequel au moins une partie supérieure du corps (20a) de la cuve extérieure (20) présente une forme sensiblement cylindrique, et le moteur de soufflerie (46) est disposé au niveau d'une quelconque zone adjacente au corps (20a) de la cuve extérieure (20) sauf des zones autour d'une partie supérieure du corps (20a).
